# EUROPEAN PATENT SPECIFICATION

(11) **EP 4 287 178 B1**
(45) Date of publication and mention of the grant of the patent: **21.10.2026**
(21) Application number: 22305800.9
(22) Date of filing: 01.06.2022
(51) Int. Cl.: G10L 15/01

(54) **IMPROVED PERFORMANCE EVALUATION OF AUTOMATIC SPEECH RECOGNITION ENGINES**
VERBESSERTE LEISTUNGSBEWERTUNG VON AUTOMATISCHEN SPRACHERKENNUNGSMASCHINEN
ÉVALUATION DE PERFORMANCE AMÉLIORÉE DE MOTEURS DE RECONNAISSANCE VOCALE AUTOMATIQUE

(43) Date of publication of application: 06.12.2023
(73) Proprietor: ViVoka, 57070 Metz (FR)
(72) Inventor: HMIDA, Firas, 57070 METZ (FR); BIVER, Alexis, 57070 METZ (FR); SHEIKH, Imran, 57070 METZ (FR); LEROY, Vincent, 57070 METZ (FR)
(74) Representative: Atout PI Laplace

(56) References cited:
- CN-A- 111 369 976
- US-A1- 2005 131 676
- US-A1- 2019 371 335

## Description

### FIELD OF THE INVENTION

The present invention relates to the field of speech processing. More specifically, it relates to the field of optimization of datasets for evaluating the performances of ASR engines.

### BACKGROUND PRIOR ART

Automatic Speech Recognition (ASR) relates to the automatic recognition of speech by computers. Typical ASR solutions consist in recording a speech from a user using a microphone, then analyzing the recorded audio waves to identify the speech that was uttered by the user. The output of an ASR engine is usually a series of words and sentences defining a textural transcription of the speech uttered by the user.

Most ASR engines can be configured in different ways, for example by using different dictionaries, grammars or training. A configuration of an ASR engine can therefore be defined as an ASR engine associated with values for each parameter of the ASR engine.

Although ASR engines provide a useful tool for understanding human speech, for example to create voice assistants, different errors may occur during the transcription. Different types of errors are:
- substitution, which consists in replacing a word by another during the transcription. For example, a substitution occurs of the word *"twinkle"* is uttered but the word *"crinkle"* transcript in the text;
- insertion, which consists in inserting a word that have not been uttered;
- suppression, which consists in suppressing or deleting one of the words uttered in the transcript, for example transcripting the text *"get done"* when the speech *"get it done"* was uttered.

One objective of the ASRs is therefore to provide a transcription of speech to text that is as accurate as possible. The performance of ASR engines, or ASR engine configurations can therefore be seen as their ability to accurately transcript speech into text.

Different ASR performance metrics have been developed for evaluating the performance of ASRs. In general, the metrics rely on tests performed on test samples that associate an audio sample and a reference transcription, which represents an exact transcription of the audio sample into text. The metrics thus generally consist in using an ASR engine to perform transcriptions of audio samples, and comparing the transcriptions performed by the ASR engines, or ASR engine configurations to the reference transcriptions.

The performance metrics are very important for the development of ASRs, because they allow determining automatically how an ASR engine and/or ASR engine configurations perform. This allows for example selecting the best engine or configuration for performing a given task, or improving the configuration or training of an ASR to improve its performance as measured by a performance metric. The metrics may belong to one or more types of metrics:
- accuracy metrics represent the accuracy of the transcription of the speech. For example, the WER, CER or PER metrics belong to this type;
- performance metrics take into account the computing performance of the ASRs, for example their memory usage or model size. The RTF (Real-Time Factor) metric belongs to this type.

The WER (acronym standing for "Word Error Rate") is the most widely used metric today, and focuses on the number of errors relative to the size of the text. The WER is calculated as the number of word errors (which is defined as the sum of the numbers of substitution, insertions and suppressions of words) divided by the total number of words that have been uttered.

The NE-WER (acronym standing for "Named Entity Word Error Rate") metric, defined by Garofolo, J. S., Voorhees, E. M., Auzanne, C. G., Stanford, V. M., & Lund, B. A. (1999). 1998 TREC-7 spoken document retrieval track overview and results. NIST SPECIAL PUBLICATION SP, 79-90. measures the WER in zones of a text that comprise named entities. Named entities are real world objects that are designed in a text, for example proper names such as names of cities or persons, date values, quantities, etc. Taking into account named entities in the word recognition allows taking into account that some words may have a plurality of significations, either as a named entity or a common name for example.

The CER (Character Error Rate).

The PER (Phoneme Error Rate).

The WWER (Weighted Word Error Rate).

The evaluation metrics can be used on a single test sample, or a dataset that comprises a plurality of samples. When a metric is used on a dataset, the value of the metric for a given ASR is generally determined as the average of the values of the metric for each test sample of the dataset.

In prior art solutions, large standard datasets are provided to calculate the performance metrics. Using large standard datasets is a popular solution, because it allows benefiting from a large amount of test samples.

However, this solution fails to take into account the specificities of individuals for a given use of ASRs. For example, the utterance of a language may be different depending upon a number of characteristics such as the age, gender or ethnicity of the speaker. For example, an ASR engine whose performance has been evaluated using a dataset mainly composed of audio speeches uttered by male speakers, and which has been configured to perform efficiently on this dataset, may perform well for male voices, but poorly for female voices. Similarly, an ASR engine selected and/or trained by performance metrics based on a general purpose dataset may perform poorly in specific environments, such as for example a retirement home wherein most speakers are elderly people.

The same issue arises for virtually any specific group of people that has a specific utterance (e.g male / female, young/old, regional accents...), or any specific environment (calm/noisy environment, specific location where specific groups of people are found, etc.)
An example of a prior art solution to calculate a performance metric for an ASR engine according to a certain language, a certain accent, a gender or an age can be found in CN 111 369 976 A.

There is therefore the need for an evaluation of an ASR engine which is adapted to any kind of speakers and environments.

### SUMMARY OF THE INVENTION

The invention is as defined in the appended independent claims. Preferred embodiments are set forth in the dependent claims.

### BRIEF DESCRIPTION OF THE DRAWINGS

The invention will be better understood and its various features and advantages will emerge from the following description of a number of exemplary embodiments provided for illustration purposes only and its appended figures in which:
- Figure 1 represents a voice assistant comprising an Automatic Speech Recognition (ASR) engine for the evaluation of which the invention can be implemented;
- Figure 2 represents an Automatic Speech Recognition (ASR) engine for the evaluation of which the invention can be implemented;
- Figure 3 represents an example of a computing system in a number of embodiments of the invention;
- Figures 4a, 4b and 4c represent three examples of computer-implemented methods in a number of embodiments of the invention;
- Figures 5a to 5d represent four examples of successive screenshots of a graphical interface to evaluate a plurality of ASR engines according to a number of embodiments of the invention.

### DETAILED DESCRIPTION OF THE INVENTION

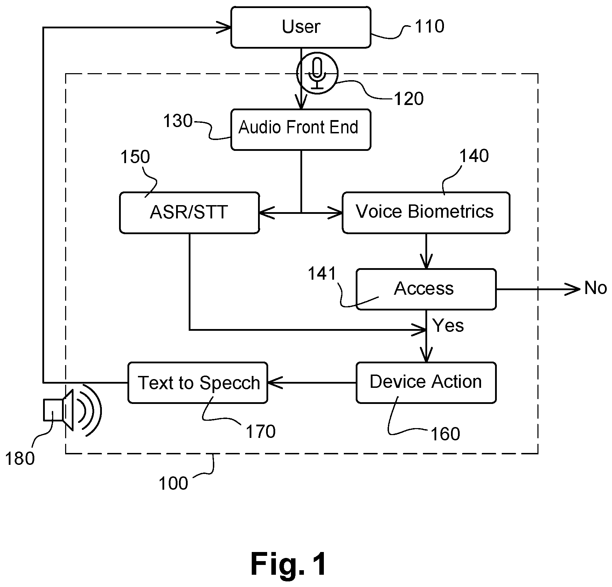

Figure 1 represents a voice assistant comprising an Automatic Speech Recognition (ASR) engine for the evaluation of which the invention can be implemented.

A voice assistant aims at interacting with a user to help this user to perform actions through speech. To this effect, a voice assistant may use software and/or hardware components running on one or more computing platforms to listen to the speech uttered by a user, perform actions accordingly, and, if needed, respond through speech to the user. Responding to speech to the user for example allows asking questions to resolve certain ambiguities, ask further details to the user, etc.

In the example of figure 1, the voice assistant 100 is formed of a plurality of modules. It is worth noting that the voice assistant of figure 1 is provided by means of example only. For the sake of intelligibility, the figure 1 represents a simplified voice assistant. The invention is of course applicable to other, and particularly more complex voice assistants.

A digital microphone 120 records the audio waves emitted by the speech of a user 110. The recorded audio waves are first processed by an audio front end module 130 which performs audio processing in order to improve the ability of the ASR 150 to use the audio to perform speech recognition. The audio front end module 130 may enhance the digital audio, for example by performing audio denoising, equalization, etc.

The voice assistant 100 may also comprise a voice biometrics module 140 that performs biometrics detection on the user voice (for example, the voice biometric module is able to determine if the voice which is hear belongs to a known/trusted user or not) and an access module 141 that may grant or not the access to action functionalities based on the voice biometrics detection. For example, the ability to perform certain actions, or even simply use the voice assistant may be restricted to a specific list of trusted users.

The voice assistant 100 also comprises an Automatic Speech Recognition (ASR) module 150, also called Speech To Text (STT) module. The ASR module interprets the audio waves (in the example of figure 1, the enhanced audio waves at the output of the audio front end module 130) and transforms them into a series of words and sentences.

Upon the detection of specific sentences, a device action module 160 can trigger the execution of specific action. For example, if the voice assistant 100 is implemented within a mobile phone and the device action module 160 detects the sentence *"call Jonathan",* the mobile phone can be configured to cause the mobile phone to call the contact called *"Jonathan".*

In certain cases, the device action consists in saying a speech to the user. For example, if the mobile phone is not aware of any contact called *"Jonathan",* the device action may consist in saying to the user *"The contact Jonathan is not known. Please repeat the name please".* To this effect, the voice assistant 100 further comprises a Text To Speech (TTS) module 170. The TTS module is configured to convert the sentence into an audio signal, and cause loudspeakers 180 to convert the audio signal into sound to be heard by the user.

Therefore, the voice assistant 100 provides a complete solution to listen to the audio inputs of a user, cause the execution of the corresponding actions, and provide the user with an interactive experience by providing an audio feedback.

The modules of the voice assistant may be executed in one or more computing devices. For example, the whole voice assistant may be executed in a user computing device such as a smartphone, tablet, personal computer, etc. Alternatively, some of the modules may be executed remotely on servers. For example, the audio front end module 130 may be executed on a user device comprising the microphone 120 and the loudspeakers 180, and the other modules may be executed remotely on one or more servers.

The present invention relates to the development of an ASR module such as the ASR module 150. The present invention is applicable to ASRs to be used in voice assistants, but also in any other applications. ASRs are used in a large number of applications, such as voice control, video games, robotics, home automation, etc.

The applicant has created a development kit to develop voice assistants called Voice Development Kit (VDK). The invention can be implemented within such a development kit for voice assistant, but also in any development suite which is able to develop, configure, test, or manage ASR engines.

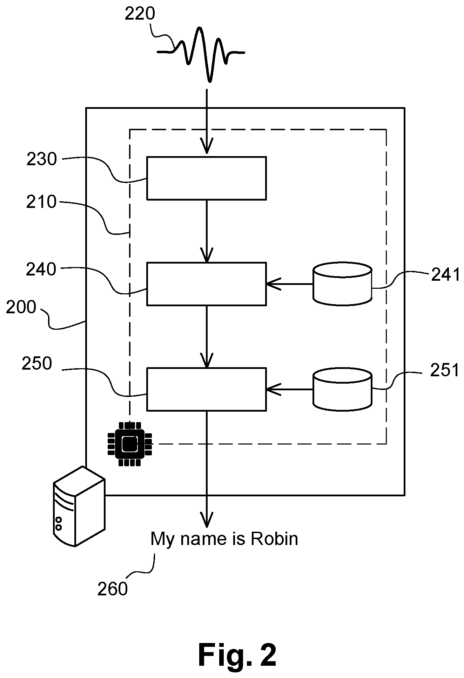

Figure 2 represents an Automatic Speech Recognition (ASR) engine for the evaluation of which the invention can be implemented.

The ASR engine is intended to be executed on a computing device 200, which may be for example a user personal computing device, or a server. The device 200 comprises at least one processing logic 210. According to various embodiments of the invention, a processing logic may be a processor operating in accordance with software instructions, a hardware configuration of a processor, or a combination thereof. It should be understood that any or all of the functions discussed herein may be implemented in a pure hardware implementation and/or by a processor operating in accordance with software instructions. It should also be understood that any or all software instructions may be stored in a non-transitory computer-readable medium. For the sake of simplicity, in the remaining of the disclosure the one or more processing logic will be called *"the processing logic".* However, it should be noted that the operations of the invention may also be performed in a single processing logic, or a plurality of processing logics, for example a plurality of processors. Even if a single computing device is represented in figure 2, the ASR engine could also be executed by distributed calculation on a plurality of processors in a plurality of different computing devices.

The processing logic 210 is configured to execute a plurality of modules 230, 240 and 250 of the ASR engine. The modules may be of different natures depending upon how the ASR engine is to be executed and the kind of processing logic. For example, the modules 230, 240 and 250 may be software modules.

The ASR engine is configured to receive as input a digital audio input 220. The digital audio input typically comprises user speech, and may take many different formats. For example, it may be streamed live, or stored in a digital file. It may be either formed of raw audio input, for example in the form of a PCM (Pulse Code Modulation) file, or a compressed audio input, for example audio compressed in the MP3 format. The digital audio input 220 may be formed of different numbers of channels, may have different bit depths, etc.

A first module 230 of acoustic model transforms the audio input 220 into a series of phonemes. Then, a second module 240 uses a dictionary of words 241 to translate the series of phonemes into a series of words. The dictionary 241 may for example comprise words of a defined language, including widely used proper nouns. The dictionary 241 may also contain words specific to a defined application of the ASR. For example, if the ASR is to be embedded within an application to control an automotive vehicle, the dictionary may comprise words dedicated to the control of vehicles.

In practice, the dictionary contains associations between a series of phonemes and words, which allows finding the right words for a series of phonemes identified by the first module 230. As explained above, the ASR engine uses phonemes in a defined phonetic alphabet (for example, IPA). The dictionary 241 therefore contains associations between a series of phonemes in the phonetic alphabet used by the ASR engines, and words.

At the output of the second module 240, a third module 250 uses a grammar 251 to translate the series of words at the output of the second module 240 into sentences. The grammar 251 represents rules of associations of words into sentences that allow forming meaningful sentences. The possible rules and possibilities of expressing rules will be described in greater detail in the remaining of this disclosure.

The grammar 251 may be represented in different ways. For example, it may be stored in a digital file, for example in an Extensible Markup Language (XML) or Backus-Naur Form (BNF) language that is loaded by the third module 250. Alternatively, the grammar may be directly embedded within the third module 250 upon the creation (for example the compilation) of the ASR. The grammar can be compiled as a graph of probability of a series of words which is loaded at the launch of the ASR.

During the execution of the ASR, the third module 250 is configured to create sentences when the series of words at the output of the module 240 comply with the rules expressed by the grammar 251. These sentences are then output 260, as in the example of figure 2 the sentence *"My name is Robin".*

The ASR of figure 2 is provided by means of example only of ASR for the evaluation of which the invention can be implemented. The invention can more generally be used for the evaluation of any ASR that converts audio speech into a text transcript. Even if an ASR has been exemplified through an ASR that uses grammar, the invention is also applicable to other kinds of ASRs such as free speech ASRs, lexicon-free ASR, and/or grammar/language model free ASR.

It is worth noting that the invention is applicable to the evaluation of an ASR engine in general, or the evaluation of a configuration of an ASR engine. A configuration of an ASR engine is an ASR associated with all the relevant values of parameters. For example, in the example of figure 2, a configuration of the ASR engine would be defined by the ASR engine set up with a specific dictionary 241, and a specific grammar 251.

The configuration of an ASR engine is of course not restricted to this example, and can be defined by one or more of:
- a specific dictionary;
- a specific grammar;
- a specific acoustic model;
- a specific provider;
- a specific audio front-end;
- specific decoder search parameters;
- etc.

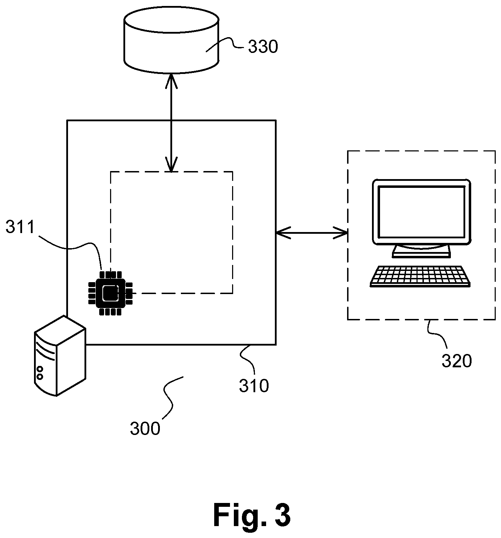

Figure 3 represents an example of a computing system in a number of embodiments of the invention.

As will be explained in more details below, one objective of a computing system according to the invention is to improve the performances of speech processing engines by allowing a user to set up different speech processing engines using different phonetic alphabets using equivalent associations between written words and phonetic representations.

To this effect, in the example of figure 3, the computing system 300 comprises a single computing device 310 that comprises at least one processing logic 311. In other embodiments of the invention, the computing system 300 may comprise a plurality of communicating computing devices comprising a plurality of processing logics for performing distributed calculations. For the sake of simplicity, in the remaining of the disclosure the at least one processing logic 311 will be called *"the processing logic".* However, it should be noted that the operations of the invention may also be performed in a single processing logic, or a plurality of processing logics, for example a plurality of processors. In cases where a plurality of processing logics is used, they may be either located on a single device, or distributed across a plurality of communicating computing devices.

The computing system 300 has access to one or more ASR test dataset 330. One or more ASR test dataset may be located in one or more data storage of the computing system 300 which can be accessed by the computing device 310. The one or more data storage may be any kind of data storage that is able to store and retrieve data, such as volatile or non-volatile memories. Any kind of memory or hard drives may be used for storing one or more datasets. The data storage may be either located in the computing device 310, or in another device of the computing system 300, such as a storage server connected in the same network as the computing device 310.

Even if more than one ASR test dataset may be used, the one or more ASR test dataset 330 may be, in the remaining of this disclosure, simply called *"the ASR test dataset" "the test dataset"* or *"the dataset"* for the sake of intelligibility of the disclosure.

Each ASR test dataset comprises ASR test samples (which may be referred to as *"the test samples"* or *"the samples"*) for the evaluation of the ASRs. Each ASR test sample comprises:
- an audio sample, or its representation;
- a reference textual transcription of the audio sample;
- at least one attribute.

The audio sample represents the sound of the voice as uttered by the speaker. It may be formed by any kind of audio sample, for example a waveform or an audio file. Any audio file and format that may be read by a computer may be used. The audio sample may thus have for example different bit depths (e.g 16 bits, 24 bits, 32 bits...), number of channels (e.g mono, stereo, 5.1, etc.), compression formats (e.g uncompressed / PCM data, lossless compression such as FLAC, lossy compression such as MP3, AAC formats, etc.) and bitrates (e.G 128 kbps, 192 kbps, 320 kbps, etc.). The audio samples may be stored for example within proprietary or standard file formats such as .wav, .flac, .mp3, .mp4, .acc file formats for instance. The characteristics of audio samples and file formats may be different within the same dataset and over the different datasets. Or it can be in the form of specific features extracted from the audio.

A representation of an audio sample is a generalization of predefined feature vectors like MFCC, Spectrograms, Filter banks etc. Or those extracted by machine learning models like Wave2vec or Deepspeech etc.

The reference textual transcription of the audio sample is a textual transcription which represents what the ASR should ideally output of the audio sample. The reference textual transcription may be expressed either as a "final" in text in a standard alphabet, that is to say a text expressed in natural language such as *"I am coming home",* or a series of phonemes expressed in a phonetic alphabet.

The at least one attribute represents an attribute associated with the audio samples which has an impact on the comprehension of the audio. It may comprise an attributes relative to the speaker, such as the gender, age, or accent of the speaker, and attributes relative to the quality of audio and/or conditions of recording, such as the number of channels of the audio sample, the duration of the audio sample, the type of microphone, kind of noise, reverberation, or SNR (Signal to Noise Ratio).

As will be explained in more details herein below, the attributes allow determining the relevance of a sample for evaluating the performance of an ASR in a given context, and therefore allow sampling the dataset in order to obtain a sampled test dataset which allow an accurate evaluation of the ASR in a defined situation.

The attributes may be associated with the samples in different ways, for example in the form of metadata.

The computing system 300 further comprises input and output interfaces 320 that allow interfacing with the computing device 310. These interfaces 320 may include any interface that is usable to interact with a computer such as a keyboard, mouse, tactile pad, a microphone coupled to voice command software, a screen, etc.

More generally, the computing system 300 may be any system that possesses interfacing, editing and computing capabilities so that a user can edit an associations between words and series of phonemes, and configure a speech processing engine to use the associations, even if the series of phonemes are written in a phonetic alphabet which is different from the phonetic alphabet used internally by the speech processing engine.

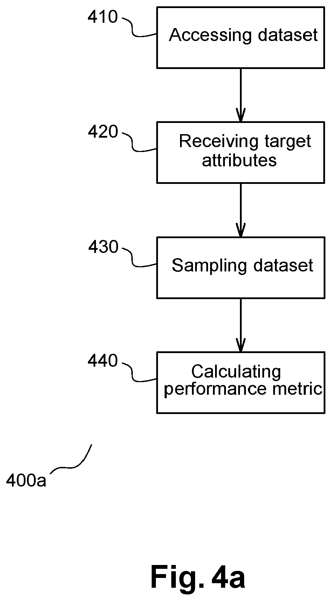

The figure 4a represents a first example of a computer-implemented method in a number of embodiments of the invention.

The method 400a is a computer-implemented method that can be executed for example by the system 300.

The method 400a comprises a first step 410 of accessing one or more test dataset, each ASR dataset comprising one or more ASR test sample, each ASR test sample comprising: an audio sample; a textual transcription of the audio sample; at least one attribute.

The embodiments discussed with reference to figure 3 are applicable to the computer-implemented method 400a.

In a number of embodiments of the invention, said at least one attribute comprises at least one attribute relative to a speaker of the audio sample or a source of synthesis of the audio sample.

Such at least one attribute relative to the speaker of the audio sample may comprise attributes such as the gender, age, or accent of the speaker.

An attribute relative to a source of synthesis of the audio sample provides an insight, for an artificially generated audio sample, of the source of generation (e.g the name of the software that performed the generation, generation parameters, etc.)

Using attributes relative to the speaker of the audio sample allows sampling the dataset to take into account the specificities of the speakers in a defined environment. For example, the evaluation of the ASRs can be tailored for a region having a specific accent, or environments associated with specific speakers, such as retirement homes with lots of elderly people, for example people with an age in the range ["70-80", "80+"]". The same effect can be achieved for the specificities of the sources of artificial generation of audio samples.

In a number of embodiments of the invention, said at least one attribute comprises at least one attribute relative to the quality of audio sample or conditions of recording of the audio sample.

Such at least one attribute relative to the quality of audio sample or conditions of recording of the audio sample may comprise one or more of the number of channels of the audio sample, the duration of the audio sample, the type of microphone used to record the audio sample, a kind of noise in the audio sample, reverberation information, or a SNR (Signal to Noise Ratio) of the audio sample.

These attributes allow sampling the dataset to take into account the specificities of the qualities or the recording of audio in specific situations for the evaluation of the ASRs. For example, it will be possible to sample the dataset to evaluate the ASRs specifically for noisy environments, when the recording is performed with a specific microphone, etc.

The one or more datasets may be obtained in different ways. For example, a standard dataset may be labeled by users. A plurality of already labeled dataset could also be used.

In a number of embodiments of the invention, said step of accessing one or more Automatic Speech Recognition ASR test dataset comprises automatically setting at least one test sample by choosing at least one value of said at least one attribute.

Stated otherwise, some values of attributes that are not initially associated with samples can be automatically added, if they can be inferred from the audio sample itself.

This can be applied to values of attributes relative to the length or the quality (for example SNR) of the audio sample whose value can be automatically computed from the audio sample itself, and associated to the audio sample.

This allows automatically completing the values of attributes in order to obtain a more complete sampling of the audio samples. Indeed, the dataset can be sampled using both existing and automatically determined attributes.

The method 400a further comprises a second step 420 of receiving from a user at least one value of said at least one attribute.

This step allows the user to input values of the attributes that correspond to the intended use case of the ASR. For example:
- if an ASR is intended to be used in a retirement home, the user may input a range of age corresponding to elderly people, for example [60; 100 years];
- if an ASR is intended to be used in a noisy environment, the user can input values of noise representative of a high SNR;
- etc.

The examples above are given by means of simple examples wherein the user defines the values of only one attribute. Of course, this is provided by means of example only, and the user may define values, or range of values for a plurality of attributes.

The values of attributes may be defined by the user in many different ways. For example the user can input directly values of the attribute, such as ages, gender, SNR, etc. The values may also be input by the user in a symbolic manner, then converted as values of attributes. For example, the user may select a noise level such as "low/medium/high noise" that can be converted in ranges of SNR values. Alternatively, the user can select a scenario that may for example be labeled as "quiet room", "concert", "public transportation", "retirement home", etc. which is converted into values of parameters. For example, a scenario "public transportation" can be expressed into values of parameters representative of high noise and mixed ages and genders.

It is therefore apparent that the step of reception of values of attributes by the user is not restricted to a specific expression of attribute by the user, and that any way of defining the values of attributes can be used.

In addition to the expression of the values, the user may enter the values through different interfaces, such as graphical interface, or configuration files.

The method 400a further comprises a third step 430 of sampling said one or more ASR test dataset into a sampled ASR test dataset according to said at least one value of said at least one attribute.

The step 430 thus consists in creating a sampled ASR test dataset which comprises test samples picked up from the one or more ASR test dataset that comply with the values of attributes that are received from the user, so that the sampled ASR test dataset comprises samples which are consistent with the parameters output by the user.

According to various embodiments, this step 430 can be performed in different ways. The different rules of selection of samples can be combined.

One rule of sampling consists in selecting the samples whose value match the values received from the user. For example, if the user is willing to select a sample with the voice of old people, only the samples associated with an age above a threshold (for example, above 60 years) can be used. Alternatively, a large majority of samples could be selected to match the parameters input by the user, while a minority corresponds to other cases. For example, 80% of samples may be selected for people aged above 60 years, and 20% of samples for people below.

Another option consists in balancing the values of samples for certain parameters. For example, the sampling may, among other parameters, consist in selecting an equal number of men and women, or select roughly the same number of speakers of the same age.

The sampling may also be performed according to a plurality of parameters, which may be a combination of parameters provided by the user, and general balancing parameters. For example, a sampling may be based on the following rules (for sampling voice of elderly people):
- a same number of samples of male and female voices;
- 80% of voice of people above 60 years old, 20% of voices of other age groups;
- 80% of noisy samples (SNR above a defined threshold), 20% of clean samples.

This is provided as an example only of a combination of rules of selection of samples in the dataset. Of course, different combinations may be defined to match a desired objective, and in order to perform a general balancing of the dataset.

In some cases, the number of samples that match the values of attributes received from the user may generate a sampled dataset whose size is too low to correctly evaluate the performance of the ASR. This may be the case because the values set by the user do not allow to select enough samples, or because it is not possible to apply balancing rules on the selected samples.

In order to tackle this issue, in a number of embodiments of the invention, the method 400a comprises, if the size of the sampled test ASR dataset at the output of said sampling is below a threshold, the steps of:
- modifying ASR test samples that do not belong to said sampled test ASR dataset according to said at least one value of said at least one attribute to generate additional ASR test samples;
- adding said additional ASR test samples to said sampled ASR test dataset.

Stated otherwise, these steps consist, when the values of parameters entered by the user do not allow picking up enough samples in the sampled ASR test dataset to reach a target threshold of samples, to automatically modify samples that have not been picked up to comply with the values of samples entered by the user.

For example, if a threshold number of 1000 samples is considered, the user is willing to evaluate the performances of ASR engines for a *"high noise scenario",* and the selection of high noise samples at step 430 allow picking up only 750 samples for the sampled ASR test dataset, 250 additional ASR test samples can be generated by adding noise to 250 test samples that were not considered as *"high noise".*

The automatic modification of samples consists in essence in a transformation of the audio sample, associated with a modification of the values of the parameters of the samples. The modifications are applicable to a plurality of parameters. For example, it may consist in:
- a noise addition, or removal to modify the SNR of the audio sample;
- modifying characteristics of the voice of the speaker, such as gender, age;
- modifying temporal characteristics of the audio sample such as the speed, tempo etc;
- modifying channel characteristics like microphone, recording improvements;
- modifying environment characteristics like room size, reverberation;
- etc.

Another option consists in generating completely new samples by using a TTS engine to generate samples that comply with the desired constraints (e.g noise, type of voice, etc.)

To this effect, in a number of embodiments of the invention, the method comprises, if the size of the sampled test ASR dataset at the output of said sampling is below a threshold:
- generating ASR test samples that do not belong to said sampled test ASR dataset using a TTS (Text To Speech) engine, voice conversion or speech generation engine according to said at least one value of said at least one attribute to generate additional ASR test samples;
- adding said additional ASR test samples to said sampled ASR test dataset.

The samples can indeed be generated from pieces of text using a TTS engine configured to use a voice that complies with the desired constraints (e.g level of noise, age/sex of the speakers, etc. This allows generating completely new samples that exactly correspond to the samples that are missing in the sampled dataset.

The options of modifying existing audio samples, and generating complete new samples, can be used separately or in combination.

The method 400a further comprises fourth step 440 of calculating a value of a performance metric for at least one ASR engine configuration using said sampled ASR test dataset.

As noted above, an ASR engine configuration designates an ASR configured with defined parameters, such as for example a specific dictionary, a specific grammar, etc. Although in most cases ASR engines are configurable, and the values of the performance metric depends upon the configuration of the ASR, in some cases a configuration may be the ASR engine itself in a default configuration, and the performance metric is calculated for the ASR engine in general.

The step 440 consists in calculating a performance metric for the ASR configuration specifically for the samples of the sampled ASR test dataset.

Therefore, the performance metric will be specifically calculated in use cases that correspond to the intended use of the user, which has been taken into account for the sampling of the sampled ASR test dataset in step 430.

Unlike prior art solutions, the method 440 therefore allows obtaining a performance measurement of an ASR engine which is adapted to the specificities of the use case for which the ASR engine will be used.

As the performance measurement is a key element of improving the performance of the ASR, the method 400a therefore allows improving the performances of ASR engines.

The invention is applicable to any ASR performance metric. By means of non-limitative example, the performance metrics below may for example be used:
- WER;
- NE-WER;
- CER;
- PER;
- WWER;
- RTF;
- Etc.

In a number of embodiments of the invention, the computer implemented method further comprises saving said sampled ASR test dataset.

This allows saving the sampled dataset for future uses, for example evaluating a new configuration of an ASR in the exact same evaluation conditions and dataset, or fine-tuning an ASR model with the generated dataset.

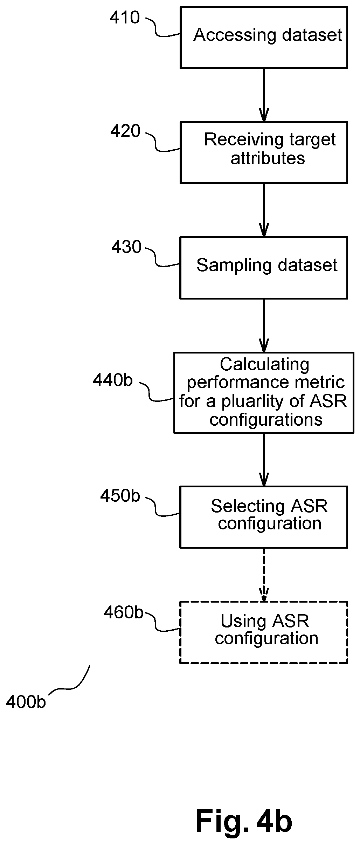

The figure 4b represents a second example of a computer-implemented method in a number of embodiments of the invention.

The method 400b comprises all the steps of the method 400a.

The method 400b additionally comprises:
- a fourth step 440b of calculating plurality of values of performance metric for a plurality of ASR engine configurations respectively using said sampled ASR test dataset;
- a fifth step 450b of selecting the ASR engine configuration for which the highest value of the metric has been calculated.

Stated otherwise, the performance metric is calculated not only for a single ASR engine configuration, but for a plurality of ASR engine configurations, and the ASR engine configuration for which the highest performance metric is found is selected.

This allows selecting the ASR configuration which best performs for the criteria defined by the user. Therefore, the performance of an ASR solution can be optimized in any situation.

By means of example, for a use case wherein an ASR is to be used in a retirement home:
- a sampled ASR test dataset having many samples with voices of old people can be generated at step 430;
- a plurality of ASR configuration are evaluated at step 440b by calculating a performance metric on the sampled ASR dataset;
- the ASR configuration which exhibits the best value of performance metric can be selected at step 450b.

Therefore, as the performance evaluation is based on a sampled dataset that is mainly based on voices of elderly people, the selected ASR configuration will perform well in the context of a retirement home.

This example demonstrates that the method 400b allows selecting a configuration that performs well in a specific case. Of course, it is not restricted to this example of retirement home, and the same principle can be applied in many use cases, such as a selection of ASR configuration which works well in noisy environments, for young people, for people having a regional accent, etc.

In a number of embodiments of the invention, the method 400b further comprises a step 460b of using said selected engine configuration.

This step consists in actually using the engine configuration that has been selected, for example by recognizing speech in the context that was aimed by the values of attributes input by the user.

As explained above, in the method 400b the performance metrics are calculated for a plurality of ASR configurations. The plurality of ASR configurations may be obtained in different ways. It may for example comprise one or more of:
- a plurality of different ASR engines;
- an ASR engine in different configurations (e.g a plurality of dictionaries, grammars, etc.). More generally any parameter that has an impact on the behavior of an ASR engine (e.g the lexicon, phonetics, grammar, silence ratio, etc.) can be modified.

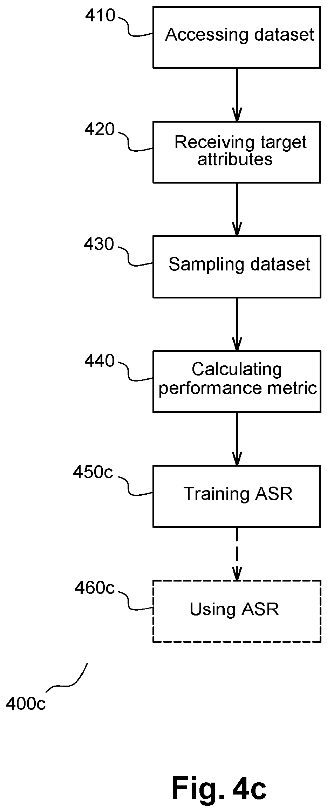

The figure 4c represents a third example of a computer-implemented method in a number of embodiments of the invention.

The aim of the method 400c is to train a configuration of an ASR engine.

To this effect, the method 400c comprises all the steps of the method 400a, and an additional step 440c of training an ASR engine configuration using said sampled ASR test dataset.

In substance, this step consists in training the ASR configuration on the sampled ASR test dataset, so that the ASR engine configuration is optimized for the sampled ASR test dataset, and therefore provides optimal results for the intended use of the ASR engine.

In a number of embodiments of the invention, said training consists in iteratively modifying configuration parameters of the ASR engine configuration in order to optimize said value of said performance metric for the ASR engine configuration using said sampled ASR test dataset.

It is known in supervised machine learning to modify parameters of a processing engine (for example, the synaptic weights of an artificial neural network) to optimize a function called "loss function". In substance, the performance metric, calculated on the sampled ASR test dataset, can serve as a loss function to optimize the performance of the ASR engine configuration.

Therefore, the ASR engine configuration can be automatically optimized for the intended use defined by the ASR test dataset.

Different parts of the ASR can be optimized, such as for example:
- the acoustic model;
- the language model;
- the decoder parameters;
- etc.

In a number of embodiments of the invention, the method 400c further comprises a step 460c of using the ASR engine configuration.

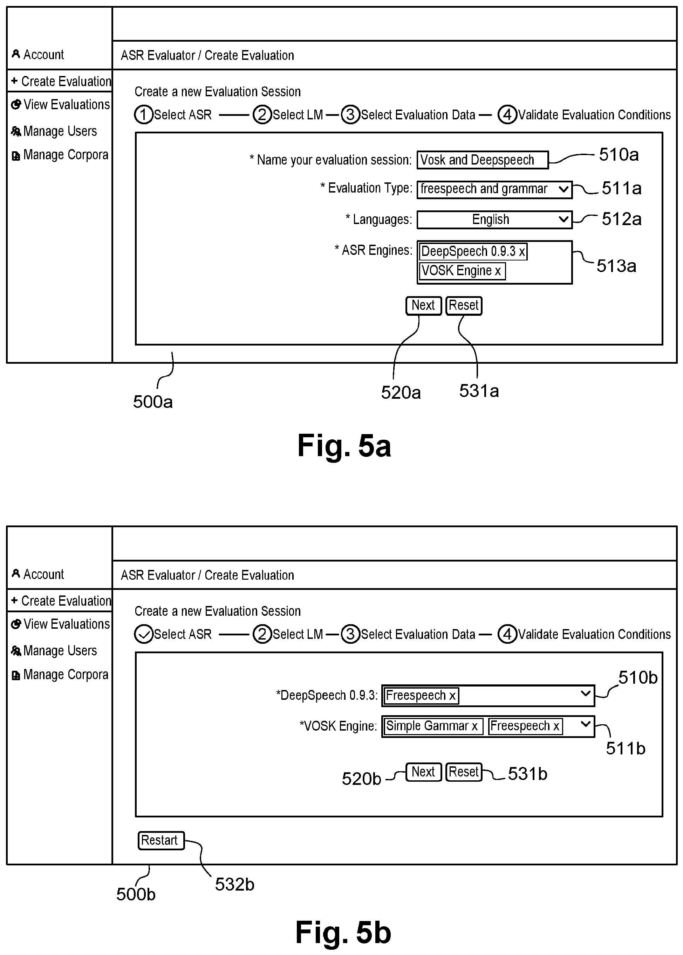

Figures 5a to 5d represent four examples of successive screenshots of a graphical interface to evaluate a plurality of ASR engines according to a number of embodiments of the invention.

The figure 5a represents a first screenshot of a graphical interface 500a to evaluate a plurality of ASR engines according to a number of embodiments of the invention.

The graphical interface proposes to create an evaluation session by specifying:
- A name for the evaluation, in the box 510a;
- A type of evaluation, in the dropdown menu 511a. The types of evaluation include for example freespeech recognition, grammar based recognition, a combination of both, etc.;
- A language, in the dropbox menu 512a;
- The ASR engines / ASR engine configurations to test, in the box 513a. In the example of figure 5a, the user indicates in the box 513a that he is willing to use the ASR engines "DeepSpeech 0.9.3", and "VOSK Engine".

The user can reset the parameters using the button 531a. Otherwise, when the user clicks on the button 520a, the graphical interface switches to the window 500b represented in the figure 5b.

In the window 500b, the user can define an ASR configuration for the language model of each of the ASR engines to test. In the example of figure 5b, the user indicates in the box 510b that the configuration "Freespech" should be used for the ASR engine 'DeepSpeech 0.9.3", and in the box 511b that that the configuration "Simple Grammar" and "Freespech" should be used for the ASR engine "VOSK Engine". In cases where a plurality of ASR engines, or ASR engine configurations, are evaluated, the same process can be repeated for each ASR engine configuration, either in a single window, or in a plurality of successive windows.

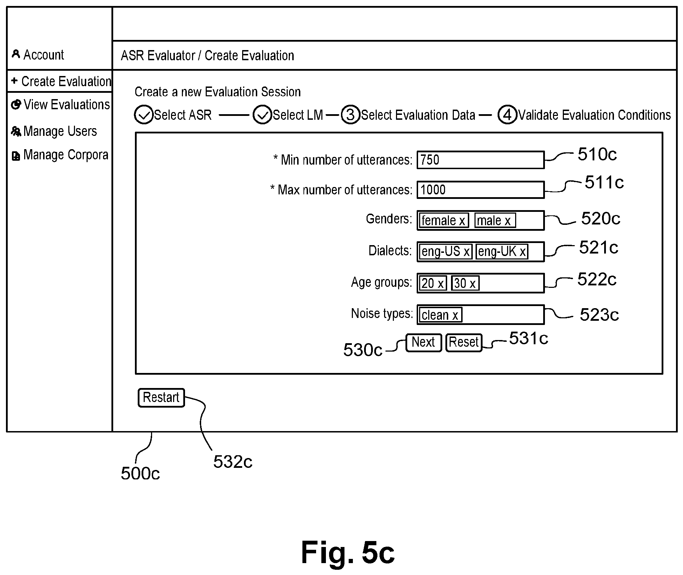

The user can reset the parameters using the button 531b, and restart the whole process using the button 532b. Otherwise, when the user clicks on the button 520b, the graphical interface switches to a third window 500c represented in figure 5c.

In the third window 500c, the user indicates:
- the number of samples to integrate in the sampled ASR test dataset. In the example of figure 5c, the user indicates that he is willing to use a sampled ASR test dataset having a number of samples comprised between a minimum number of samples 510c and a maximum number of samples 511c;
- the at least one value of the at least one attribute according to which the sampling of the ASR test dataset shall be done. In the example of figure 5c, the user indicates that:
   - in box 520c, for the attribute "Gender", he is willing to have audio samples of both female and male voices;
   - in box 521c, for the attribute "Dialect", he is willing to have audio samples in the American English (eng-US), and British English (eng-UK) dialects;
   - in box 522c, for the attribute "Age group", he is willing to have audio samples of speakers aged in their twenties and their thirties;
   - in box 523c, for the attribute "Noise type", he is willing to have only clean samples.

The inputs of the user in the window 500c correspond to the step 420 of the method 400. In this example, the use case thus corresponds to clean samples of young adults speaking in American and British English.

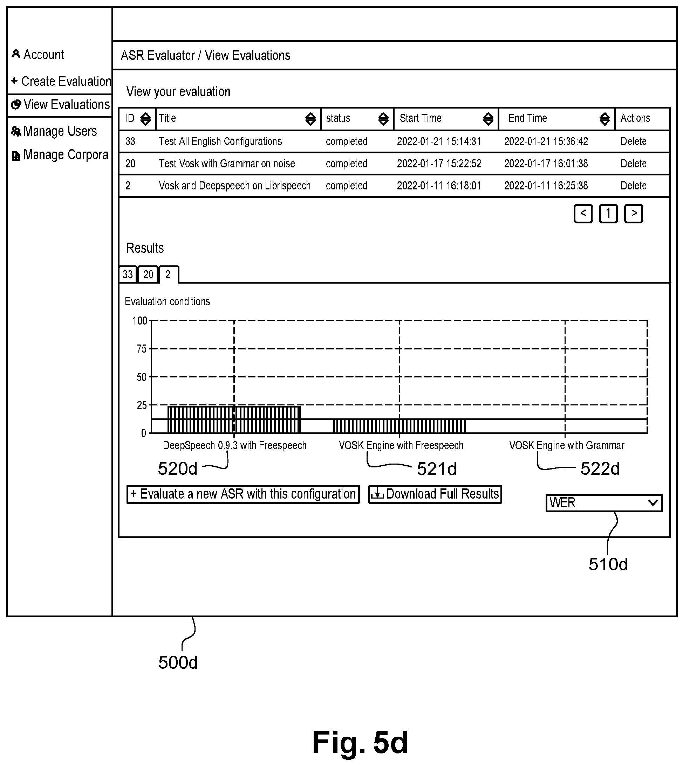

The user can reset the parameters using the button 531c, and restart the whole process using the button 532c. Otherwise, when the user clicks on the button 530c:
- The one or more test dataset is sampled according to the values entered by the user in the window 500c;
- the graphical interface switches to a fourth window 500d represented in figure 5d.

The window 500d represents the output of the calculation of the performance metrics of the ASR configurations selected by the windows 500a and 500b using the sampled dataset.

In the example of figure 5d, the metric used is the WER selected using the dropdown menu 510d.

In the example of figure 5d:
- The configuration "DeepSpeech 0.9.3 with Freespeech has a high Word Error Rate 520d;
- The configuration "VOSK Engine with Freespeech" has a moderate Word Error Rate 521d;
- The configuration "VOSK Engine with Grammar" has nearly null Word Error Rate 522.

The interface therefore allows the user to have a clear overview of the performances of the different ASR engine configurations in the selected use case.

This example demonstrates the ability of the invention to allow a user to select the best ASR engine configuration in a defined use case.

The figures 5a to 5d are however provided by means of example only of the ability of the invention to allow a user to select the best ASR engine configuration in a defined use case. Of course, different interfaces may be used, and the user may for example select different ASR engines, configurations, parameters or performance metrics than those represented in figures 5a to 5d.

The examples described above are given as non-limitative illustrations of embodiments of the invention. They do not in any way limit the scope of the invention which is defined by the following claims.

## Claims

1. A computer-implemented method (400a, 400b, 400c) comprising the steps of :
- accessing (410) one or more Automatic Speech Recognition, ASR, test dataset (330), each ASR test dataset comprising one or more ASR test samples, each ASR test sample comprising:
- an audio sample, or its representation ;
- a reference textual transcription of the audio sample ;
- a plurality of attributes ;
- receiving (420) from a user a plurality of values of said plurality of attributes
- sampling (430) said one or more ASR test datasets into a sampled ASR test dataset which comprises samples picked from the one or more ASR test dataset that comply with each of the values of attributes that are received from the user, so that the sampled ASR test dataset comprises samples which are consistent with the parameters output by the user;
- calculating (440) a value of a performance metric for at least one ASR engine configuration using said sampled ASR test dataset.

2. The computer-implemented method of claim 1, wherein said at least one attribute comprises at least one attribute relative to a speaker of the audio sample or a source of synthesis of the audio sample.

3. The computer-implemented method of one of claims 1 or 2, wherein said at least one attribute comprises at least one attribute relative to the quality of audio sample or conditions of recording of the audio sample.

4. The computer-implemented method of any of the preceding claims, wherein said step of accessing one or more Automatic Speech Recognition ASR test dataset comprises automatically setting at least one test sample by choosing at least one value of said at least one attribute.

5. The computer-implemented method of any of the preceding claims comprising, if the size of the sampled test ASR dataset at the output of said sampling is below a threshold:
- modifying ASR test samples that do not belong to said sampled test ASR dataset according to said at least one value of said at least one attribute to generate additional ASR test samples ;
- adding said additional ASR test samples to said sampled ASR test dataset.

6. The computer-implemented method of any of the preceding claims comprising, if the size of the sampled test ASR dataset at the output of said sampling is below a threshold:
- generating ASR test samples that do not belong to said sampled test ASR dataset using a TTS, Text To Speech, engine, voice conversion or speech generation engine according to said at least one value of said at least one attribute to generate additional ASR test samples ;
- adding said additional ASR test samples to said sampled ASR test dataset.

7. The computer-implemented method of any one of the claims 1 to 6, further comprising:
- calculating (440b) a plurality of values of performance metric for a plurality of ASR engine configurations respectively using said sampled ASR test dataset ;
- selecting (450b) the ASR engine configuration for which the highest value of the metric has been calculated.

8. The computer-implemented method of any one of the claims 1 to 6, further comprising training (440c) an ASR engine configuration using said sampled ASR test dataset.

9. The computer-implemented method of claim 6, wherein said training consists in iteratively modifying configuration parameters of the ASR engine configuration in order to optimize said value of said performance metric for the ASR engine configuration on said sampled ASR test dataset.

10. The computer-implemented method of one of claims 7 to 9, further comprising using (460b, 460c) said selected or trained ASR engine configuration.

11. The computer-implemented method of any of the preceding claims, further comprising saving said sampled ASR test dataset.

12. An automatic speech recognition engine trained by a method according to one of claims 8 to 9.

13. A computer-implemented method of using an automatic speech recognition engine selected by a method according to claim 7, or trained according to one of claims 8 to 9.

14. A computing system (300) comprising at least one processing logic (311) configured to execute a method according to any one of claims 1 to 10 and 13.

15. A computer program product comprising computer code instructions which, when the program is executed by a computer, cause the computer to carry out the steps of the method according to any one of claims 1 to 11 and 13.

## Patentansprüche

1. Computerimplementiertes Verfahren (400a, 400b, 400c), das die folgenden Schritte umfasst:
- Zugreifen (410) auf einen oder mehrere Testdatensätze (330) für automatische Spracherkennung, ASR, wobei jeder ASR-Testdatensatz eine oder mehrere ASR-Testproben umfasst, wobei jede ASR-Testprobe Folgendes umfasst:
- eine Audioprobe oder deren Darstellung;
- eine Referenztexttranskription der Audioprobe;
- eine Vielzahl von Attributen;
- Empfangen (420) von einem Benutzer einer Vielzahl von Werten der Vielzahl von Attributen;
- Abtasten (430) des einen oder der mehreren ASR-Testdatensätze in einen abgetasteten ASR-Testdatensatz, der Proben umfasst, die aus dem einen oder den mehreren ASR-Testdatensätzen entnommen wurden und jeden der vom Benutzer empfangenen Attributwerte erfüllen, sodass der abgetastete ASR-Testdatensatz Proben umfasst, die mit den vom Benutzer ausgegebenen Parametern konsistent sind;
- Berechnen (440) eines Wertes einer Leistungskennzahl für mindestens eine ASR-Engine-Konfiguration unter Verwendung des abgetasteten ASR-Testdatensatzes.

2. Computerimplementiertes Verfahren nach Anspruch 1, wobei das mindestens eine Attribut mindestens ein Attribut in Bezug auf einen Sprecher der Audioprobe oder eine Synthesequelle der Audioprobe umfasst.

3. Computerimplementiertes Verfahren nach einem der Ansprüche 1 oder 2, wobei das mindestens eine Attribut mindestens ein Attribut in Bezug auf die Qualität der Audioprobe oder Aufnahmebedingungen der Audioprobe umfasst.

4. Computerimplementiertes Verfahren nach einem der vorstehenden Ansprüche, wobei der Schritt des Zugreifens auf einen oder mehrere Testdatensätze für automatische Spracherkennung, ASR, automatisches Festlegen mindestens einer Testprobe durch Auswählen mindestens eines Wertes des mindestens einen Attributs umfasst.

5. Computerimplementiertes Verfahren nach einem der vorstehenden Ansprüche, das, wenn die Größe des abgetasteten ASR-Testdatensatzes beim Ausgeben der Abtastung unterhalb eines Schwellenwerts liegt, Folgendes umfasst:
- Modifizieren von ASR-Testproben, die nicht zu dem abgetasteten ASR-Testdatensatz gehören, gemäß dem mindestens einen Wert des mindestens einen Attributs, um zusätzliche ASR-Testproben zu generieren;
- Hinzufügen der zusätzlichen ASR-Testproben zum ASR-Testdatensatz.

6. Computerimplementiertes Verfahren nach einem der vorstehenden Ansprüche, das, wenn die Größe des abgetasteten ASR-Testdatensatzes beim Ausgeben der Abtastung unterhalb eines Schwellenwerts liegt, Folgendes umfasst:
- Generieren von ASR-Testproben, die nicht zu dem abgetasteten ASR-Testdatensatz gehören, unter Verwendung einer TTS-, Text-zu-Sprache-, Engine, einer Sprachkonvertierungs- oder Sprachgenerierungs-Engine gemäß dem mindestens einen Wert des mindestens einen Attributs, um zusätzliche ASR-Testproben zu generieren;
- Hinzufügen der zusätzlichen ASR-Testproben zum ASR-Testdatensatz.

7. Computerimplementiertes Verfahren nach einem der Ansprüche 1 bis 6, weiter umfassend:
- Berechnen (440b) einer Vielzahl von Werten der Leistungskennzahl für eine Vielzahl von ASR-Engine-Konfigurationen jeweils unter Verwendung des abgetasteten ASR-Testdatensatzes;
- Auswählen (450b) der ASR-Engine-Konfiguration, für die der höchste Wert der Kennzahl berechnet wurde.

8. Computerimplementiertes Verfahren nach einem der Ansprüche 1 bis 6, weiter umfassend Trainieren (440c) einer ASR-Engine-Konfiguration unter Verwendung des abgetasteten ASR-Testdatensatzes.

9. Computerimplementiertes Verfahren nach Anspruch 6, wobei das Trainieren darin besteht, Konfigurationsparameter der ASR-Engine-Konfiguration iterativ zu modifizieren, um den Wert der Leistungskennzahl für die ASR-Engine-Konfiguration auf dem abgetasteten ASR-Testdatensatz zu optimieren.

10. Computerimplementiertes Verfahren nach einem der Ansprüche 7 bis 9, weiter umfassend Verwenden (460b, 460c) der ausgewählten oder trainierten ASR-Engine-Konfiguration.

11. Computerimplementiertes Verfahren nach einem der vorstehenden Ansprüche, weiter umfassend Speichern des ASR-Testdatensatzes.

12. Automatische Spracherkennungs-Engine, die durch ein Verfahren nach einem der Ansprüche 8 bis 9 trainiert wird.

13. Computerimplementiertes Verfahren zur Verwendung einer automatischen Spracherkennungs-Engine, die durch ein Verfahren nach Anspruch 7 ausgewählt oder nach einem der Ansprüche 8 bis 9 trainiert wird.

14. Rechensystem (300), das mindestens eine Verarbeitungslogik (311) umfasst, die so konfiguriert ist, dass sie ein Verfahren nach einem der Ansprüche 1 bis 10 und 13 ausführt.

15. Computerprogrammprodukt, das Computercodeanweisungen umfasst, die, wenn das Programm von einem Computer ausgeführt wird, den Computer veranlassen, die Schritte des Verfahrens nach einem der Ansprüche 1 bis 11 und 13 auszuführen.

## Revendications

1. Procédé mis en œuvre par ordinateur (400a, 400b, 400c) comprenant les étapes de :
- accès (410) à un ou plusieurs ensembles de données de test de reconnaissance vocale automatique (ASR) (330), chaque ensemble de données de test ASR comprenant un ou plusieurs échantillons de test ASR, chaque échantillon de test ASR comprenant :
- un échantillon audio, ou sa représentation ;
- une transcription textuelle de référence de l'échantillon audio ;
- une pluralité d'attributs ;
- la réception (420) de la part d'un utilisateur d'une pluralité de valeurs de ladite pluralité d'attributs
- l'échantillonnage (430) dudit un ou plusieurs ensembles de données de test ASR dans un ensemble de données de test ASR échantillonné qui comprend des échantillons choisis à partir du ou des ensembles de données de test ASR qui sont conformes à chacune des valeurs des attributs reçus de l'utilisateur, de sorte que l'ensemble de données de test ASR échantillonné comprend des échantillons qui sont cohérents avec les paramètres émis par l'utilisateur ;
- le calcul (440) d'une valeur d'une mesure de performance pour au moins une configuration de moteur ASR en utilisant ledit ensemble de données de test ASR échantillonné.

2. Procédé mis en œuvre par ordinateur selon la revendication 1, dans lequel ledit au moins un attribut comprend au moins un attribut relatif à un locuteur de l'échantillon audio ou à une source de synthèse de l'échantillon audio.

3. Procédé mis en œuvre par ordinateur selon l'une quelconque des revendications 1 ou 2, dans lequel ledit au moins un attribut comprend au moins un attribut relatif à la qualité de l'échantillon audio ou aux conditions d'enregistrement de l'échantillon audio.

4. Procédé mis en œuvre par ordinateur selon l'une quelconque des revendications précédentes, dans lequel ladite étape d'accès à un ou plusieurs jeux de données de test de reconnaissance vocale automatique (ASR) comprend la définition automatique d'au moins un échantillon de test en choisissant au moins une valeur dudit au moins un attribut.

5. Procédé mis en œuvre par ordinateur selon l'une quelconque des revendications précédentes, comprenant, si la taille de l'ensemble de données ASR de test échantillonné à la sortie dudit échantillonnage est inférieure à un seuil :
- la modification des échantillons de test ASR qui n'appartiennent pas audit ensemble de données de test ASR échantillonné en fonction d'au moins une valeur dudit au moins un attribut pour générer des échantillons de test ASR supplémentaires ;
- l'ajout desdits échantillons de test ASR supplémentaires à l'ensemble de données de test ASR échantillonné.

6. Procédé mis en œuvre par ordinateur selon l'une quelconque des revendications précédentes, comprenant, si la taille de l'ensemble de données ASR de test échantillonné à la sortie dudit échantillonnage est inférieure à un seuil :
- la génération d'échantillons de test ASR qui n'appartiennent pas à l'ensemble de données de test ASR échantillonné à l'aide d'un moteur TTS, Text To Speech, de conversion vocale ou de génération de parole selon au moins une valeur dudit au moins un attribut pour générer des échantillons de test ASR supplémentaires ;
- l'ajout desdits échantillons de test ASR supplémentaires à l'ensemble de données de test ASR échantillonné.

7. Procédé mis en œuvre par ordinateur selon l'une quelconque des revendications 1 à 6, comprenant en outre :
- le calcul (440b) d'une pluralité de valeurs de mesures de performance pour une pluralité de configurations de moteur ASR respectivement en utilisant ledit ensemble de données de test ASR échantillonné ;
- la sélection (450b) de la configuration du moteur ASR pour laquelle la valeur la plus élevée de la mesure a été calculée.

8. Procédé mis en œuvre par ordinateur selon l'une quelconque des revendications 1 à 6, comprenant en outre l'entraînement (440c) d'une configuration de moteur ASR à l'aide dudit ensemble de données de test ASR échantillonné.

9. Procédé mis en œuvre par ordinateur selon la revendication 6, dans lequel ledit entraînement consiste à modifier de manière itérative les paramètres de configuration de la configuration du moteur ASR afin d'optimiser ladite valeur de ladite mesure de performance pour la configuration du moteur ASR sur ledit ensemble de données de test ASR échantillonné.

10. Procédé mis en œuvre par ordinateur selon l'une quelconque des revendications 7 à 9, comprenant en outre l'utilisation (460b, 460c) de ladite configuration de moteur ASR sélectionnée ou entraînée.

11. Procédé mis en œuvre par ordinateur selon l'une quelconque des revendications précédentes, comprenant en outre la sauvegarde dudit ensemble de données de test ASR échantillonné.

12. Moteur de reconnaissance vocale automatique entraîné par un procédé selon l'une des revendications 8 à 9.

13. Procédé mis en œuvre par ordinateur d'utilisation d'un moteur de reconnaissance vocale automatique sélectionné par un procédé selon la revendication 7, ou entraîné selon l'une des revendications 8 à 9.

14. Système informatique (300) comprenant au moins une logique de traitement (311) configurée pour exécuter un procédé selon l'une quelconque des revendications 1 à 10 et 13.

15. Produit de programme informatique comprenant des instructions qui, lorsque le programme est exécuté par un ordinateur, amènent l'ordinateur à exécuter les étapes du procédé selon l'une quelconque des revendications 1 à 11 et 13.
